# EUROPEAN PATENT APPLICATION

(11) **EP 4 671 170 A1**
(43) Date of publication of application: **31.12.2025**
(21) Application number: 24760080.2
(22) Date of filing: 01.02.2024
(51) Int. Cl.: B65G 61/00, G06Q 50/10, B65G 1/00

(54) **DELIVERY SYSTEM, BUILDING, AND DISTRIBUTION SYSTEM**

(30) Priority: 20.02.2023 JP 2023024635; 14.04.2023 JP 2023066732; 28.04.2023 JP 2023075280
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2024/003349
(87) International publication number: WO 2024/176773

(57) **Abstract**

It is desired to deliver a delivery object automatically. A delivery system is a delivery system for automatically delivering a delivery object to each of plural dwellings in a building by using a delivery vehicle traveling in a passage in the building, the delivery vehicle including a delivery object entrance opening portion, a delivery object exit opening portion, an extrusion device, and an extendable extension plate, the delivery system including a control unit that performs control such that the delivery vehicle moves to a delivery object yard provided in a destination dwelling of the delivery object, the extension plate is extended to the delivery object yard in a case in which the delivery vehicle arrives at the delivery object yard, and the delivery object is extruded to the delivery object yard by the extrusion device.

## Description

### Technical Field

The present disclosure relates to a delivery system, a building, and a distribution system.

### Background Art

A region-based intermodal traffic system is known (see, for example, Japanese National-Phase Publication (JP-A) No. 2008-530695). A large city structure in which underground city tunnels covering transportation systems are arranged radially from a center to a plurality of surrounding super high-rise cities and annularly between the super high-rise cities is known (see, for example, Japanese Patent Application Laid-Open (JP-A) No. 10-246005).

### SUMMARY OF INVENTION

### Technical Problem

It is desired to deliver a delivery object automatically.

### Solution to Problem

According to a first aspect of the disclosure, a delivery system is provided. A delivery system is a delivery system for automatically delivering a delivery object to each of a plurality of dwellings in a building by using a delivery vehicle traveling in a passage in the building, the delivery vehicle including a delivery object entrance opening portion, a delivery object exit opening portion, an extrusion device, and an extendable extension plate, the delivery system including a control unit that performs control such that the delivery vehicle moves to a delivery object yard provided in a destination dwelling of the delivery object, the extension plate is extended to the delivery object yard in a case in which the delivery vehicle arrives at the delivery object yard, and the delivery object is extruded to the delivery object yard by the extrusion device.

The delivery object may flow in one direction from the delivery object entrance opening portion to the delivery object exit opening portion.

A height of the delivery object yard of each of the plurality of dwellings may correspond to a height of the extension plate.

In a case in which the delivery object is a food product, the control unit may control a temperature of a temperature control device mounted on a distribution vehicle that distributes one or a plurality of the delivery objects to the building so that a temperature of the delivery object in a case in which the delivery vehicle reaches a delivery object yard provided in a dwelling that is a destination of the delivery object is a predetermined temperature.

The temperature control device may be a refrigerator or a heater.

The delivery vehicle may include a cooking device that cooks the delivery object in a case in which the delivery object is a food product.

The delivery vehicle may include a heating device that heats the delivery object, a heating portion in which the delivery object is heated by the heating device in a case in which the delivery object is a food product, and a preheating portion that is provided at a position closer to the delivery object entrance opening portion than the heating portion and in which the delivery object is heated in advance.

In a second aspect, a building is provided. The building includes the delivery system.

The building may include a plurality of floors. The conveyance lanes may include a lifting lane for moving the delivery object between different floors of the building.

In a third aspect, a distribution system is provided. The distribution system includes the delivery system described above. The distribution system includes a server that manages transportation of a delivery object using a self-driving vehicle from a logistics base outside a building to the building.

The above summary does not enumerate all of the necessary features of the disclosure. A subcombination of these feature groups can also be an invention.

### BRIEF DESCRIPTION OF DRAWINGS

Fig. 1 illustrates an overall concept of a system 10 according to a first embodiment.
Fig. 2 schematically illustrates a state in which a delivery object is delivered to a destination dwelling 82 by a delivery vehicle 200 of the first embodiment in an elevation view.
Fig. 3 schematically illustrates an arrangement of an entrance door and a package yard of the dwelling 82 of the first embodiment in a plan view.
Fig. 4 schematically illustrates the delivery vehicle 200 of the first embodiment.
Fig. 5 schematically illustrates an operation of the delivery vehicle 200 of the first embodiment.
Fig. 6 schematically illustrates a distribution box 700 of the first embodiment.
Fig. 7 illustrates an example of a data structure of distribution information managed by a server 40 according to the first embodiment.
Fig. 8 is a flowchart illustrating a flow of delivery processing executed in a system 10 of the first embodiment.
Fig. 9 schematically illustrates an example of a hardware configuration of a computer 1200 according to the first embodiment.
Fig. 10 schematically illustrates a delivery vehicle 300 according to a second embodiment.
Fig. 11 is a front view illustrating an opening device 310 of a second embodiment.
Fig. 12A is a perspective view partially illustrating an opening device 310 of the second embodiment.
Fig. 12B is a perspective view partially illustrating the opening device 310 of the second embodiment.
Fig. 13A is a front view of a palm portion 320A side of the opening device 310 of the second embodiment.
Fig. 13B is a perspective view of a suction pad 324 of the opening device 310 of the second embodiment.
Fig. 14 is a diagram schematically illustrating an example of a functional configuration of the opening device 310 of the second embodiment.
Fig. 15 is a flowchart illustrating a flow of delivery processing executed in a system of the second embodiment.
Fig. 16A is a flowchart illustrating a flow of opening/cooking processing executed in the system of the second embodiment.
Fig. 16B is a flowchart illustrating a flow of opening/cooking processing executed in the system of the second embodiment.
Fig. 17A is a side view schematically illustrating a delivery vehicle 200 of a third embodiment.
Fig. 17B is a plan view schematically illustrating the delivery vehicle 200 of the third embodiment.
Fig. 17C is a side view schematically illustrating an operation of the delivery vehicle 200 of the third embodiment.
Fig. 17D is a side view schematically illustrating an operation of the delivery vehicle 200 of the third embodiment.
Fig. 17E is a side view schematically illustrating an operation of the delivery vehicle 200 of the third embodiment.
Fig. 17F is a side view schematically illustrating an operation of the delivery vehicle 200 of the third embodiment.
Fig. 18A is a flowchart illustrating a flow of delivery processing executed in a system 10 of the third embodiment.
Fig. 18B is a flowchart illustrating a flow of delivery processing executed in the system 10 of the third embodiment.

### DESCRIPTION OF EMBODIMENTS

Hereinafter, the present invention will be described through embodiments of the invention, but the following embodiments do not limit the invention according to the claims. Not all combinations of features described in the embodiments are essential to the solution of the invention.

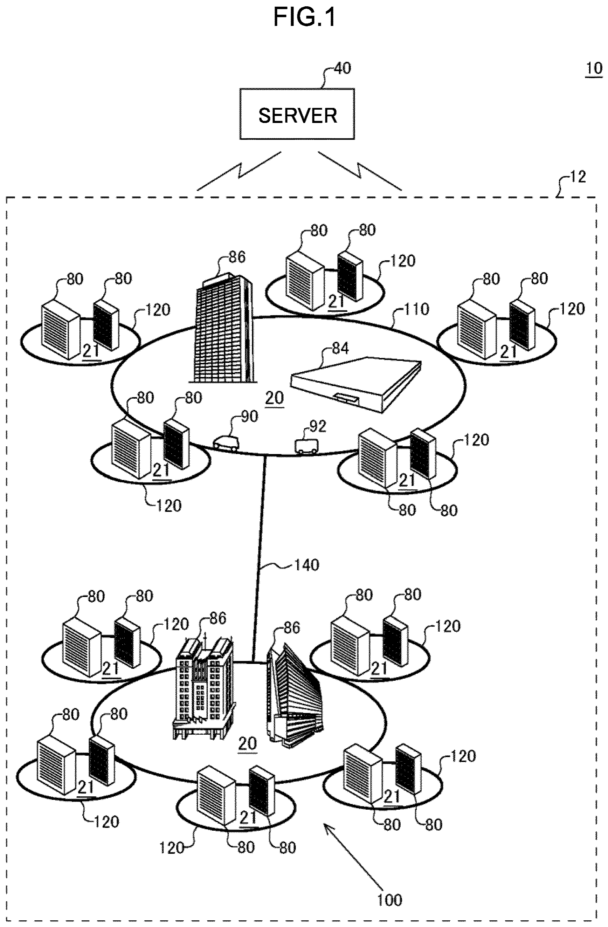

Fig. 1 illustrates the overall concept of a system 10. The system 10 includes a server 40, an urban structure 12, a taxi 90, and a distribution vehicle 92. The urban structure 12 includes a plurality of apartment buildings 80, a logistics base 84, public facilities 86, and a road structure 100. The public facilities 86 are a large-scale commercial facility, a government facility, a waste disposal site, and the like.

The road structure 100 is a road dedicated to self-driving. The road structure 100 includes a main road 110, a branch road 120, and a connecting road 140. The taxi 90 is a self-driving vehicle for passenger transportation. The distribution vehicle 92 is a self-driving vehicle for package transportation. Examples of the logistics base 84 include a logistics warehouse and a delivery food manufacturing facility.

The main road 110 is a self-driving vehicle exclusive road for high-speed traveling. The main road 110 is, for example, a road of which a reference speed is regulated to be 200 km/h. The branch road 120 is a self-driving vehicle exclusive road for medium-to-low speed traveling. The branch road 120 includes, for example, a lane of which a reference speed is regulated to be 100 km/h and a lane of which a reference speed is regulated to be 30 km/h. The apartment building 80 is provided in a living area 21 surrounded by the branch road 120.

The living area 21 is, for example, an area where humans live. The living area 21 is, for example, an area where humans dwell. A small shop may be present in the living area 21. The public facility 86 is provided in a public facility area 20 surrounded by the main road 110. The public facility area 20 is an area where humans do not dwell in principle. As will be described later, neither an intersection nor a traffic light is provided in the road structure 100. As will be described later, the road structure 100 is provided so that the taxi 90 or the distribution vehicle 92 can move between the main road 110 and the branch road 120 through a lane change.

Server 40 manages transportation services and home delivery services provided to dwellers of apartment building 80. For example, the server 40 predicts a taxi allocation demand in the urban structure 12 by using AI, and locates the taxi 90 according to the allocation demand. Upon receiving an allocation request from a dweller of the apartment building 80, the server 40 allocates the taxi 90 near the dweller.

The server 40 manages transportation of a delivery object by the distribution vehicle 92 from the logistics base 84 to the apartment building 80. The server 40 causes the distribution vehicle 92 to load a delivery object addressed to a dweller of the apartment building 80 at the logistics base 84, and causes the distribution vehicle 92 to distribute the delivery object to the apartment building 80. For example, upon receiving a delivery food provision request from a dweller of the apartment building 80, the server 40 causes the distribution vehicle 92 to load delivery food manufactured at a delivery food manufacturing facility that is the logistics base 84, and causes the distribution vehicle 92 to deliver the delivery food to the apartment building 80. In a case in which a package addressed to a dweller of the apartment building 80 arrives at a logistics warehouse that is the logistics base 84, the server 40 causes the distribution vehicle 92 to load the package, and causes the distribution vehicle 92 to deliver the package to the apartment building 80. As will be described later, the apartment building 80 is provided with a delivery vehicle for automatically delivering a delivered delivery object such as delivery food or a package to each dwelling. As a result, a package can be automatically distributed from the logistics base 84 to each dwelling. The delivery food is an example of a "food product" in "the case in which a delivery object is a food product".

The road structure 100 can reduce a time taken for a dweller of the apartment building 80 to move between a living area and a public facility area or between a plurality of living areas. It is possible to deliver a delivery object from the logistics base 84 to a dwelling of a dweller of the apartment building 80 in a short time.

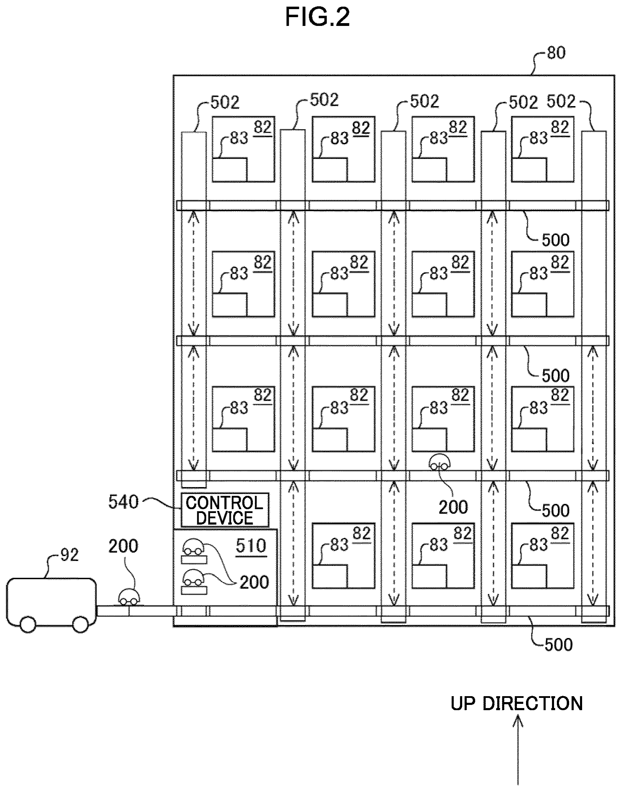

Next, a package delivery system will be described with reference to Figs. 2 to 5. Fig. 2 schematically illustrates, in an elevation view, how the distribution vehicle 92 delivers a delivery object to the apartment building 80. The apartment building 80 includes a plurality of dwellings 82, a passage 500, a storage 510, and a control device 540.

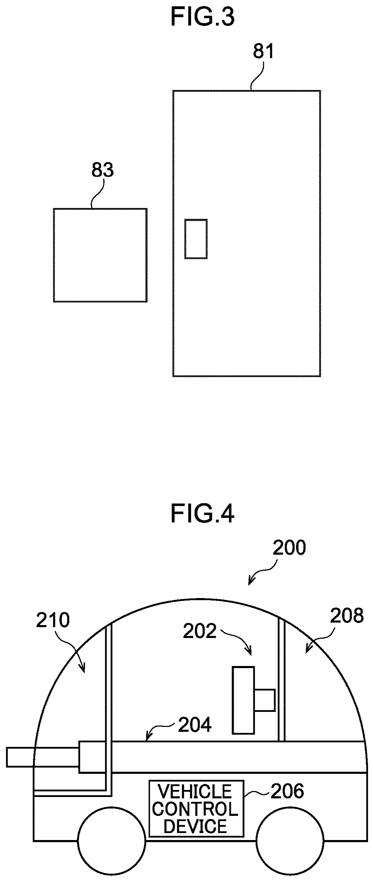

The passage 500 and the dwelling 82 are provided in the apartment building 80. The passages 500 of the respective floors are connected by a lifting lane 502. The apartment building 80 is an example of a building. A package yard 83 is provided next to an entrance door 81 of each dwelling 82 (Fig. 3). The package yard 83 is an example of a delivery object yard. The apartment building 80 includes a plurality of floors. In the apartment building 80, a plurality of dwellings 82 are provided over a plurality of floors.

The distribution vehicle 92 transports a delivery object 94 addressed to the dwelling 82 in the apartment building 80 from the logistics base 84 to the apartment building 80 through self-driving. In the case of arriving at the apartment building 80, the distribution vehicle 92 sends the delivery object 94 into a delivery vehicle 200. The delivery vehicle 200 moves along the passage 500 and the lifting lane 502 to deliver the delivery object 94 sent into the delivery vehicle 200 to the destination dwelling 82.

The lifting lane 502 may include, for example, a roller conveyor provided to be movable up and down. The control device 540 controls operations of the delivery vehicle 200 and the lifting lane 502 so that the delivery vehicle 200 reaches the destination dwelling 82.

As illustrated in Fig. 4, the delivery vehicle 200 includes a delivery object entrance opening portion 208 provided at the rear part of the vehicle, a delivery object exit opening portion 210 provided at the front part of the vehicle, an extrusion device 202, an extendable extension plate 204, and a vehicle control device 206. The delivery object entrance opening portion 208 and the delivery object exit opening portion 210 may be provided with an openable and closable door. The extrusion device 202 is provided on at least one of the left and right side walls in the cabin of the delivery vehicle 200. The extension plate 204 is provided at the bottom of the cabin of the delivery vehicle 200, and can be extended to the vehicle front side from the delivery object exit opening portion 210 by a drive mechanism. The delivery object 94 flows in one direction from delivery object entrance opening portion 208 to delivery object exit opening portion 210. That is, in a case in which the distribution vehicle 92 sends the delivery object 94, the delivery object 94 is sent into the delivery vehicle 200 through the delivery object entrance opening portion 208. In a case in which the delivery object 94 is placed in the package yard 83 of the destination dwelling 82, the delivery object 94 is extruded from the delivery object exit opening portion 210 by the extrusion device 202, and the delivery object 94 is placed in the package yard 83.

The control device 540 and the vehicle control device 206 configure a part of a delivery system for automatically delivering the delivery object 94 to the dwelling 82 by using the delivery vehicle 200. The vehicle control device 206, the control device 540, and the server 40 operate in cooperation with each other to function as a control unit in the delivery system.

The control device 540 calculates a route through which the delivery vehicle 200 reaches the package yard 83 provided in the destination dwelling 82 of the delivery object 94 through the passage 500, and transmits a command for movement along the calculated route to the vehicle control device 206.

The storage 510 is a place where the delivery vehicle 200 loaded with the delivery object 94 waits. In a case in which the delivery object 94 cannot be placed in the package yard 83 of the destination dwelling 82 of the delivery object 94, the control device 540 causes the delivery vehicle 200 loaded with the delivery object 94 to wait in the storage 510. In a case in which the delivery vehicle 200 can deliver the delivery object 94 to the package yard 83 provided in the destination dwelling 82 of the delivery object 94 loaded on the delivery vehicle 200 waiting in the storage 510, the control device 540 moves the delivery vehicle 200 from the storage 510.

Before the delivery object 94 addressed to the dwelling 82 in the apartment building 80 is dispatched from the logistics base 84 outside the apartment building 80, the server 40 may determine whether the delivery object 94 can be stored in the storage 510. In the case of determining that the delivery object 94 can be stored in the storage 510, the server 40 may dispatch the delivery object 94 from the logistics base 84.

Before the delivery object 94 addressed to the dwelling 82 in the apartment building 80 is dispatched from the logistics base 84, the server 40 may determine whether the delivery object 94 can be placed in the package yard 83 provided in the destination dwelling 82. In the case of determining that the delivery object 94 can be stored in the package yard 83, the server 40 may dispatch the delivery object 94 from the logistics base 84. For example, before the delivery object 94 addressed to the dwelling 82 in the apartment building 80 is dispatched from the logistics base 84, the server 40 may determine whether the delivery object 94 can be placed in the package yard 83 on the basis of a delivery status of another delivery object 94 addressed to the dwelling 82. Specifically, before the delivery object 94 addressed to the dwelling 82 in the apartment building 80 is dispatched from the logistics base 84, the server 40 may determine whether the delivery object 94 can be placed in the package yard 83 on the basis of a delivery status of another delivery object 94 addressed to the dwelling 82 and the size of the package yard 83. For example, in a case in which there is only a space for one delivery object 94 in the package yard 83, and another delivery object 94 addressed to the dwelling 82 is in an unreceived state, it may be determined that the delivery object 94 cannot be placed in the package yard 83. The package may be distributed as the delivery object 94 in a state of being put in a distribution box having a predetermined size. The server 40 may determine whether the delivery object 94 can be placed in the package yard 83 on the basis of the size of the distribution box and the size of the package yard 83.

Before the delivery object 94 addressed to the dwelling 82 in the apartment building 80 is dispatched from the logistics base 84 outside the apartment building 80, the server 40 may further determine whether there is the delivery vehicle 200 that can deliver the delivery object 94. In the case of determining that there is the delivery vehicle 200 that can deliver the delivery object 94, the server 40 may dispatch the delivery object 94 from the logistics base 84. For example, the server 40 manages the number of delivery vehicles 200 in the apartment building 80, and may determine that there is a delivery vehicle 200 that can deliver the delivery object 94 in a case in which the number of delivery vehicles 200 not loaded with the delivery objects 94 is a predetermined number or larger.

Before a prescribed type of delivery object 94 is dispatched from the logistics base 84 outside the apartment building 80 to the dwelling 82 in the apartment building 80, the server 40 may inquire of the dweller of the destination dwelling 82 whether to deliver the delivery object 94. Upon receiving a delivery instruction from the dweller, the server 40 may dispatch the delivery object 94 from the logistics base 84. For example, in a case in which the type of the delivery object 94 addressed to the dwelling 82 is a fresh product, the server 40 may inquire of the dweller of the destination dwelling 82 whether to deliver the delivery object 94. The server 40 may transmit the inquiry to a mobile terminal of the dweller of the dwelling 82 and receive a delivery instruction from the mobile terminal of the dweller. The server 40 may transmit an inquiry to a home server of the destination dwelling 82 and receive a delivery instruction of the dweller from the home server.

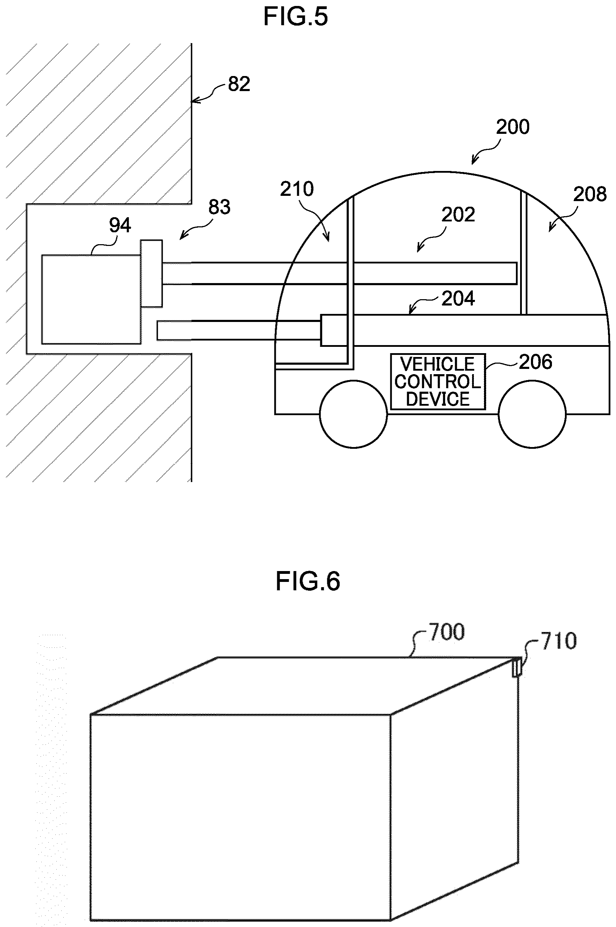

The vehicle control device 206 causes the delivery vehicle 200 loaded with the delivery object 94 addressed to the dwelling 82 to move to the package yard 83 provided in the dwelling 82. As illustrated in Fig. 5, the vehicle control device 206 extends the extension plate 204 to the package yard 83 at a timing at which the delivery vehicle 200 reaches the package yard 83. The vehicle control device 206 controls the extrusion device 202 to extrude the delivery object 94 to the package yard 83.

Here, the height of the package yard 83 corresponds to the height of the extension plate 204. Specifically, the height of the extension plate 204 is higher than the height of the package yard 83 by the thickness of the extension plate 204. As described above, the height of the package yard 83 matches the height of the extension plate 204 of the delivery vehicle 200. These heights may be determined by a unified specification, standard, or the like.

Fig. 6 schematically illustrates a distribution box 700. The delivery object 94 may be put in the distribution box 700 to be distributed. The distribution box 700 includes a controller 710. The controller 710 stores identification information of the distribution box 700. The controller 710 has a function of detecting whether a package is in the distribution box 700. The controller 710 may detect whether a package is in the distribution box 700 by analyzing an image acquired by a camera provided in the distribution box 700.

The server 40 manages position information of the distribution box 700 in real time. For example, the controller 710 has a wireless communication function, and transmits status information including the current position of the distribution box 700, identification information of the distribution box 700, and information indicating whether a package is in the distribution box 700 to the server 40 through wireless communication. The controller 710 may have a function of transmitting status information by using a near field communication function. In this case, in the case of receiving the status information transmitted from the distribution box 700, the home server of the dwelling 82 or the portable terminal of the dweller, the control device 540, the distribution vehicle 92, and the vehicle control device 206 may transfer the status information to the server 40.

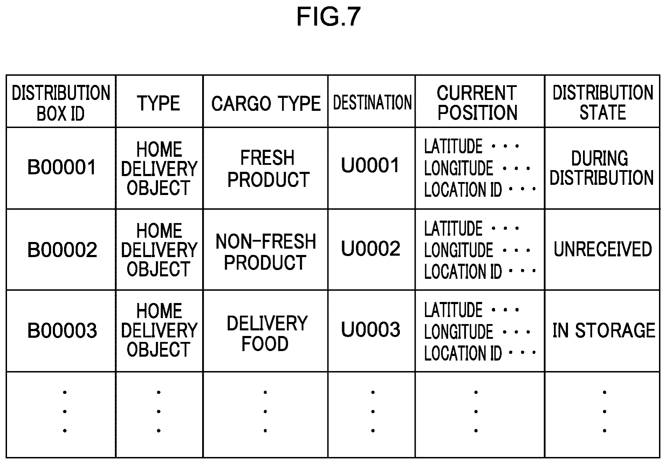

Fig. 7 illustrates an example of a data structure of distribution information managed by the server 40. The server 40 manages a distribution box ID, the type of a distribution box, a cargo type, a destination, the current position, and the distribution state in association with each other.

The "distribution box ID" is identification information of the distribution box 700. The "type" is information indicating the type of the distribution box 700. The "type" is information indicating one of a "home delivery object" and "others". The "cargo type" indicates the type of a package placed in the distribution box 700.

In a case in which the distribution box 700 is a distribution box dedicated to home delivery objects, information indicating a "home delivery object" is fixedly set in advance in the "type". In the "cargo type", a "fresh product", a "non-fresh product", and "delivery food" are set according to the type of a distribution object put in the distribution box 700. The "fresh product" indicates, for example, that the delivery object requires quality maintenance measures, such as refrigeration or freezing. The "non-fresh product" indicates that the delivery object does not require quality maintenance measures such as refrigeration or freezing. The "delivery food" indicates that the delivery object is a heated delivery food.

The "destination" is identification information of a delivery destination of the distribution box 700. The "current position" is information indicating the current position of the distribution box 700. The "distribution state" is information indicating a distribution state of the distribution box 700. The server 40 registers the "destination" on the basis of a dispatch request from the portable terminal of the dweller. The server 40 updates the "current position" and the "distribution state" in real time on the basis of the status information transmitted from the distribution box 700.

The "current position" includes geographic information such as latitude information and longitude information. The "current position" may include logical information for specifying the current position of the distribution box 700, such as identification information of the distribution vehicle 92, identification information of the apartment building 80, and identification information of the dwelling 82, in addition to the geographical information.

The distribution state includes information such as "not dispatched", "during distribution", "unreceived", "received", "in storage", and "not used". "Not dispatched" indicates a state in which the distribution box 700 has not been dispatched. "Not dispatched" indicates a state in which the distribution box 700 has not been dispatched from the logistics base 84 or a state in which the distribution box 700 has not been dispatched from the package yard 83 of the dwelling 82.

"During distribution" indicates a state in which the distribution box 700 is dispatched from the logistics base 84 or the package yard 83 to be delivered to a destination and is not stored in the storage 510. "Unreceived" indicates a state in which the distribution box 700 is at the package yard 83 and a package is in the distribution box 700. "Received" indicates a state in which the distribution box 700 is in the package yard 83 and no package is in the distribution box 700. "In storage" indicates a state in which the distribution box 700 is stored in the storage 510. "Not used" indicates a state in which the distribution box 700 is not used for distribution. For example, "not used" indicates a state in which the distribution box 700 is stored in an empty state in the storage 510, the logistics base 84, or the like.

In a case in which the delivery object 94 is a fresh product, the control device 540 may control the temperature of a refrigerator mounted on the distribution vehicle 92 so that the temperature of the delivery object 94 in a case in which the delivery vehicle 200 reaches the package yard 83 provided in the dwelling 82 that is a destination of the delivery object 94 becomes a predetermined temperature.

In a case in which the delivery object 94 is a heated delivery food, the control device 540 may control the temperature of a heater mounted on the distribution vehicle 92 so that the temperature of the delivery object 94 in a case in which the delivery vehicle 200 reaches the package yard 83 provided in the dwelling 82 that is a destination of the delivery object 94 becomes a predetermined temperature. The refrigerator and the heater are examples of a temperature control device.

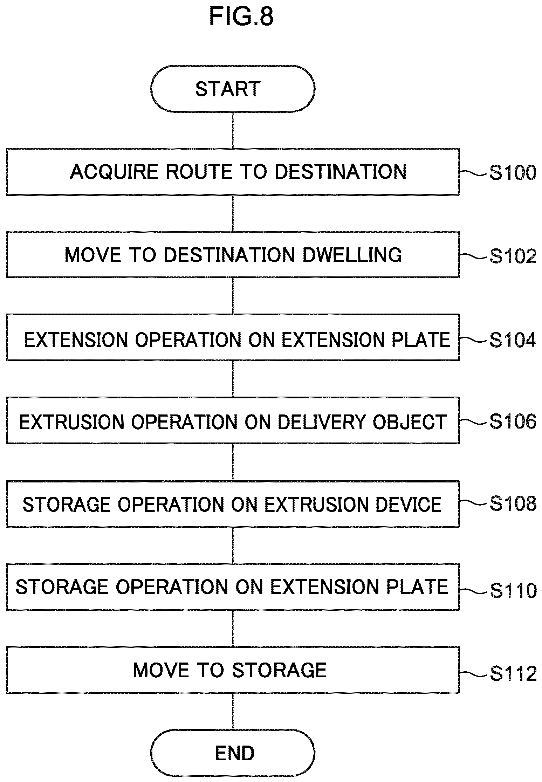

Fig. 8 is a flowchart illustrating a flow of delivery processing executed in the system 10. The processing in the flowchart of Fig. 8 is started in a case in which the delivery object 94 addressed to the dwelling 82 is loaded on the delivery vehicle 200 from the distribution vehicle 92.

In S100, the vehicle control device 206 acquires a route from the control device 540 to the destination dwelling 82.

In S102, the vehicle control device 206 causes the delivery vehicle 200 loaded with the delivery object 94 addressed to the dwelling 82 to move to the package yard 83 provided in the dwelling 82.

In S104, the vehicle control device 206 extends the extension plate 204 to the package yard 83.

In S106, the extrusion device 202 performs control such that the delivery object 94 is extruded to the package yard 83.

In S108, the vehicle control device 206 performs a storage operation on the extrusion device 202.

In S110, the vehicle control device 206 performs a storage operation on the extension plate 204.

In S112, the vehicle control device 206 causes the delivery vehicle 200 to move to the storage 510.

As described above, according to the system 10, it is possible to automatically deliver a delivery object. Therefore, a desired object can be delivered to a dweller of the apartment building 80 in a case in which the dweller wants the object.

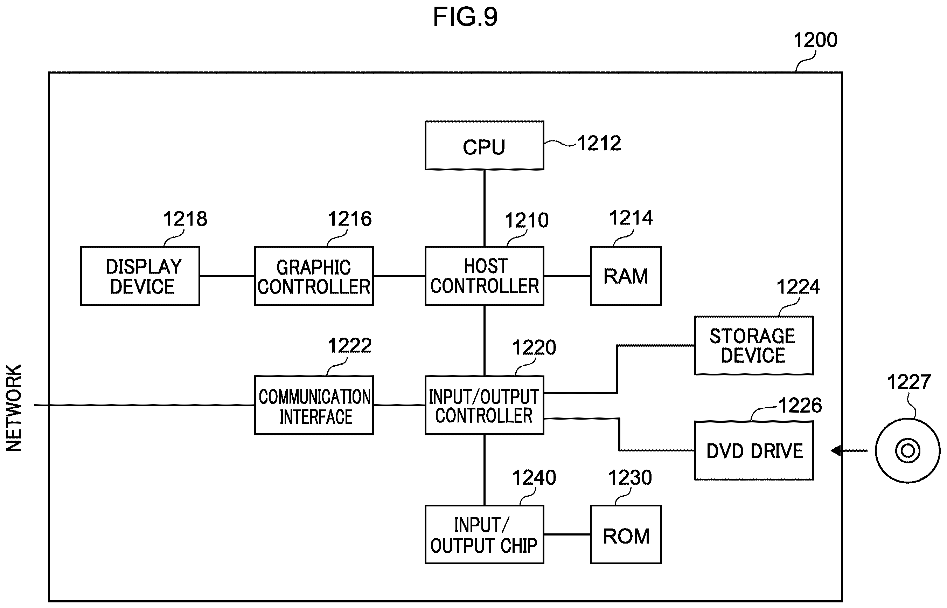

Fig. 9 schematically illustrates an example of a hardware configuration of a computer 1200 that functions as the server 40, the control device 540, and the vehicle control device 206. A program installed in the computer 1200 can cause the computer 1200 to function as one or more "units" of the device according to the present embodiment, or cause the computer 1200 to execute an operation associated with the device according to the embodiment or one or more "units" thereof, and/or cause the computer 1200 to execute a process according to the embodiment or a stage of the process. Such programs may be executed by a CPU 1212 to cause the computer 1200 to execute certain operations associated with some or all of the blocks in the flowcharts and block diagrams described herein.

The computer 1200 according to the embodiment includes a CPU 1212, a RAM 1214, and a graphic controller 1216, which are connected to each other via a host controller 1210. The computer 1200 also includes input/output units such as a communication interface 1222, a storage device 1224, a DVD drive 1226, and an IC card drive, which are connected to the host controller 1210 via an input/output controller 1220. The DVD drive 1226 may be a DVD-ROM drive, a DVD-RAM drive, or the like. The storage device 1224 may be a hard disk drive, a solid state drive, or the like. The computer 1200 also includes a ROM 1230 and legacy input/output units such as a keyboard, which are connected to the input/output controller 1220 via an input/output chip 1240.

The CPU 1212 operates according to programs stored in the ROM 1230 and the RAM 1214, thereby controlling each unit. The graphic controller 1216 acquires image data generated by the CPU 1212 in a frame buffer or the like provided in the RAM 1214 or itself, and causes the image data to be displayed on the display device 1218.

The communication interface 1222 communicates with other electronic devices via a network. The storage device 1224 stores programs and data used by the CPU 1212 in the computer 1200. The DVD drive 1226 reads a program or data from the DVD-ROM 1227 or the like and provides the program or data to the storage device 1224. The IC card drive reads a program and data from the IC card and/or writes the program and data to the IC card.

The ROM 1230 stores therein a boot program or the like executed by the computer 1200 at the time of activation and/or a program depending on hardware of the computer 1200. The input/output chip 1240 may also connect various input/output units to the input/output controller 1220 via a USB port, a parallel port, a serial port, a keyboard port, a mouse port, or the like.

The program is provided by a computer-readable storage medium such as the DVD-ROM 1227 or an IC card. The program is read from a computer-readable storage medium, installed in the storage device 1224, the RAM 1214, or the ROM 1230, which is also an example of a computer-readable storage medium, and executed by the CPU 1212. The information processing described in such a program is read by the computer 1200 and provides cooperation between the program and the various types of hardware resources. A device or a method may be configured by implementing an operation or processing of information according to use of the computer 1200.

For example, in a case in which communication is executed between the computer 1200 and an external device, the CPU 1212 may execute a communication program loaded in the RAM 1214 and instruct the communication interface 1222 to perform communication processing on the basis of processing described in the communication program. Under the control of the CPU 1212, the communication interface 1222 reads transmission data stored in a transmission buffer area provided in a recording medium such as the RAM 1214, the storage device 1224, the DVD-ROM 1227, or the IC card, transmits the read transmission data to the network, or writes reception data received from the network to a reception buffer area or the like provided on the recording medium.

The CPU 1212 may cause the RAM 1214 to read all or a necessary portion of a file or database stored in an external recording medium such as the storage device 1224, the DVD drive 1226 (DVD-ROM 1227), or the IC card, and may execute various types of processing on data in the RAM 1214. Next, the CPU 1212 may write back the processed data to the external recording medium.

Various types of information such as various types of programs, data, tables, and databases may be stored in a recording medium and subjected to information processing. The CPU 1212 may execute various types of processing on the data read from the RAM 1214, including various types of operations, information processing, condition determination, conditional branching, unconditional branching, information retrieval/replacement, and the like, which are described throughout the disclosure and specified by a command sequence of a program, and writes back the results to the RAM 1214. The CPU 1212 may search for information in a file, a database, or the like in the recording medium. For example, in a case in which a plurality of entries each having an attribute value of a first attribute associated with an attribute value of a second attribute is stored in the recording medium, the CPU 1212 may search for an entry in which the attribute value of the first attribute matches a specified condition from the plurality of entries, read the attribute value of the second attribute stored in the entry, and thus acquire the attribute value of the second attribute associated with the first attribute satisfying a predetermined condition.

The programs or software modules described above may be stored in the computer 1200 or a computer-readable storage medium near the computer 1200. A recording medium such as a hard disk or a RAM provided in a server system connected to a dedicated communication network or the Internet may be used as a computer-readable storage medium, and provides a program to the computer 1200 via the network.

Next, a second embodiment will be described. In the second embodiment, the same elements, members, and the like as those in the first embodiment are denoted by the same reference numerals, and detailed description thereof will be omitted.

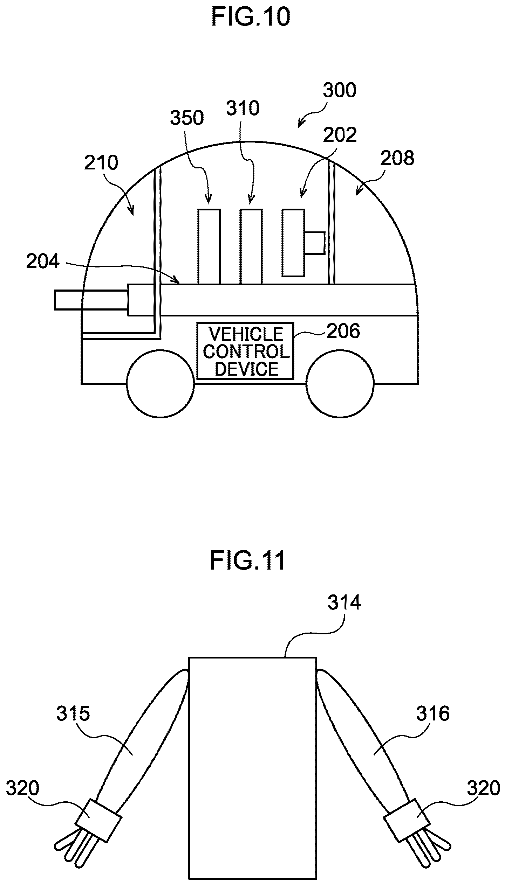

Fig. 10 illustrates a delivery vehicle 300 according to a second embodiment. The delivery vehicle 300 includes an opening device 310 and a cooking device 350.

The opening device 310 is a device that, in a case in which the delivery object 94 is a food product, opens a packaging of the food product. For example, in a case in which the delivery object 94 has a container, a food product body contained in the container, and a lid (including a wrap) that seals the container, opening using the opening device 310 may include removing the lid from the container. The opening of the delivery object 94 using the opening device 310 may also include incising a part of the lid. In a case in which the delivery object 94 has a food product body and a bag (including a film) covering the food product body, the opening may include incising a part of the bag. The opening of the delivery object 94 using the opening device 310 may be performed in a case in which the delivery object 94 is an object other than a food product.

Fig. 11 illustrates an example of a structure of the opening device 310. The opening device 310 has a base portion 314 and two arm portions 315 and 316. The arm portions 315 and 316 are attached to the left and right of the base portion 314. The arm portions 315 and 316 are rotatable about attachment portions with respect to the base portion 314.

Grip portions 320 (which will be described later in detail) for gripping the delivery object 94 are attached to the tips of the arm portions 315 and 316. The number of arm portions is not limited to two, and may be one or three or more. Driving of the opening device 310 is controlled by the vehicle control device 206.

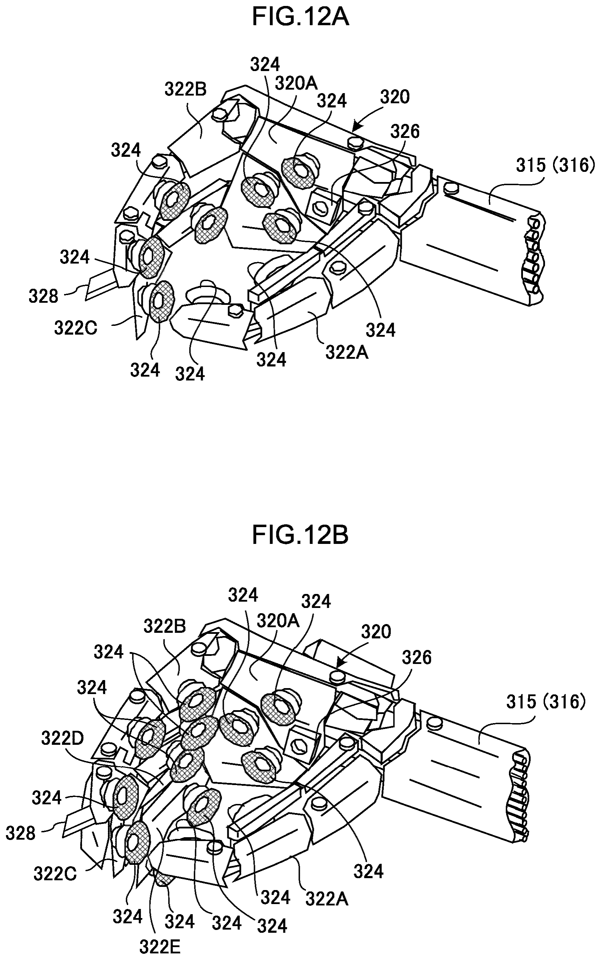

As illustrated in Fig. 12A, the grip portions 320 are attached to the tips of the arm portions 315 and 316. As an example, the grip portions 320 have a structure similar to that of a human hand. The grip portions 320 are rotatably attached to the arm portions 315 and 316 (intelligent hand system). As described above, the opening device 310 has the grip portions 320 attached to the tips of the arm portions 315 and 316, and is a device or a mechanism that may be referred to as a so-called robot hand.

The grip portion 320 of the embodiment has a palm portion 320A and three finger portions 322A, 322B, and 322C. The three finger portions 322A, 322B, and 322C extend from the palm portion 320A. The number of finger portions attached to one grip portion 320 is not limited to three, and may be, for example, five as illustrated in Fig. 12B. That is, in the example illustrated in Fig. 12B, five finger portions 322A, 322B, 322C, 322D, and 322E attached to one palm portion 320A are provided.

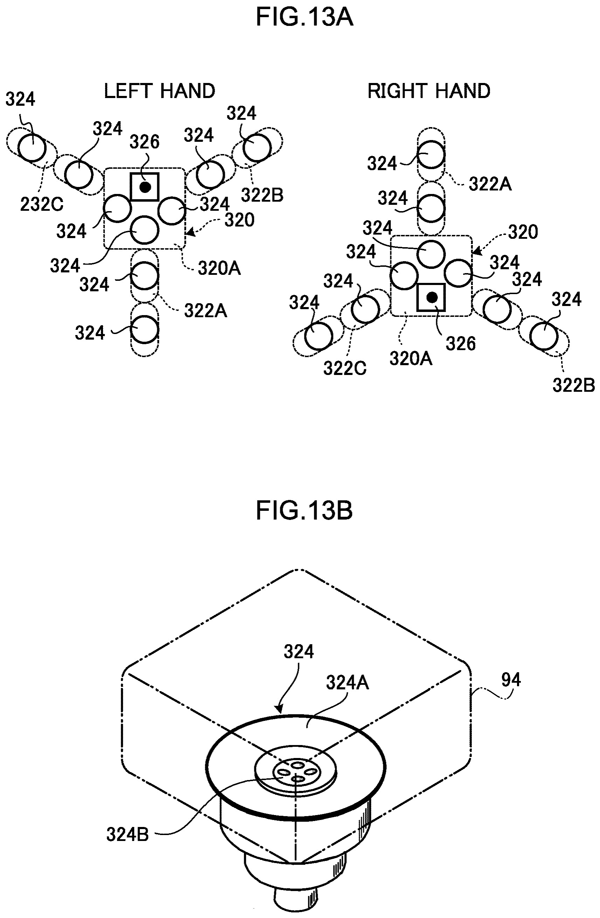

Each of the three finger portions 322A, 322B, and 322C includes a plurality of joints. In the embodiment, as illustrated in Figs. 13A and 13B, the structure of the grip portion 320 is symmetrical between the right hand and the left hand.

A plurality of (three in the embodiment) suction pads 324 are attached to the palm portion 320A of the grip portion 320. A plurality of (two in the embodiment) suction pads 324 are attached to each of three finger portions 322A, 322B, and 322C with a joint portion as a boundary.

A palm sensor 326 is attached to the palm portion 320A side. The palm sensor 326 includes a high-resolution camera that identifies the type of the delivery object 94 and a motion processing unit (MoPU) that specifies a position of the delivery object 94.

As illustrated in Fig. 13B, the suction pad 324 includes a pad portion 324A and a nipple 324B. The pad portion 324A is a portion that comes into close contact with the delivery object 94 in the case of gripping the delivery object 94. The pad portion 324A is made of rubber. In a state in which the pad portion 324A is in close contact with the delivery object 94, a close contact space is formed between the pad portion 324A and the delivery object 94. The nipple 324B forms an air flow path. This air flow path sucks air in the close contact space formed between the pad portion 324A and the delivery object 94. That is, the suction pad 324 of the embodiment has an air suction structure. The suction pad 324 exerts a suction force by sucking air in the sealed space from a hole provided in the nipple 324B to generate vacuum (including substantially vacuum). The suction pad 324 is not limited to the air suction structure, and may have a structure in which the volume of the sealed space is simply changed by the deformation of the pad portion 324A to perform suction.

An edged tool 328 is attached to at least one of the finger portions 322A, 322B, and 322C (the finger portion 322B in the example illustrated in Fig. 12A and the example illustrated in Fig. 12B). The edged tool 328 is a knife in the example illustrated in Figs. 12A and 12B. In a case in which the delivery object 94 is a food product including a container, a food product body, and a lid as described above, the edged tool 328 may be used to incise the lid of the delivery object 94.

In a case in which the edged tool 328 is a knife as in the example illustrated in Fig. 12A, the lid of the delivery object 94 can be incised linearly. The edged tool 328 may be a scissors. Even in a case in which the edged tool 328 is a scissors, the lid of the delivery object 94 can be incised linearly. In a case in which the edged tool 328 is a pair of scissors, two blades of the scissors may be operated by a plurality of finger portions among the finger portions 322A, 322B, and 322C. The edged tool 328 may be a needle. In a case in which the edged tool 328 is a needle, a hole having a dotted shape or a predetermined open cross sectional area can be drilled in the lid of the delivery object 94.

The edged tool 328 may be provided separately from the grip portion 320. That is, there may be a configuration in which the edged tool 328 separate from the grip portion 320 is gripped by the grip portion 320, and the delivery object 94 is opened by incising the lid of the delivery object 94 or the like. For example, the edged tool 328 may be gripped by sucking the edged tool 328 with the suction pad 324, or may be gripped by holding the edged tool 328 with the finger portions 322A, 322B, and 322C.

The palm sensor 326 of the embodiment includes a high-resolution camera. The high-resolution camera identifies the imaged delivery object 94 on the basis of captured image information. For example, the high-resolution camera identifies whether the delivery object 94 is a care product such as a shampoo, a conditioner, a cosmetic, or a toothpaste, or a food product such as a cup ramen or a confectionery bag.

In other words, the high-resolution camera has a function of acquiring information for specifying the type of delivery object 94 (a shape, a size, a hardness, and the like).

The MoPU outputs motion information indicating a motion of the imaged delivery object 94 from an image of an object captured at a specific frame rate. For example, from an image of an object captured at a frame rate of 1000 frames/second or more, motion information indicating a motion of a delivery object as a relative motion with the arm portions 315 and 316 is output at a frame rate of 1000 frames/second or more. The frame rate may be increased in a case in which a moving delivery object is detected, and the frame rate may be decreased in a case in which a fixed object (a non-moving delivery object) is detected.

The MoPU outputs, as motion information, vector information of a motion of a point indicating a presence position of the delivery object 94 along a predetermined coordinate axis. That is, the motion information output from the MoPU does not include information necessary for identifying the type of the imaged delivery object 94 (the above care product and food product), and includes only information indicating the motion (a movement direction and a movement speed) on the coordinate axis (x-axis, y-axis, and z-axis) of a center point (or a centroid point) of the delivery object 94.

That is, it is possible to perform accurate guidance to a trajectory in a case in which the grip portion 320 approaches the delivery object 94.

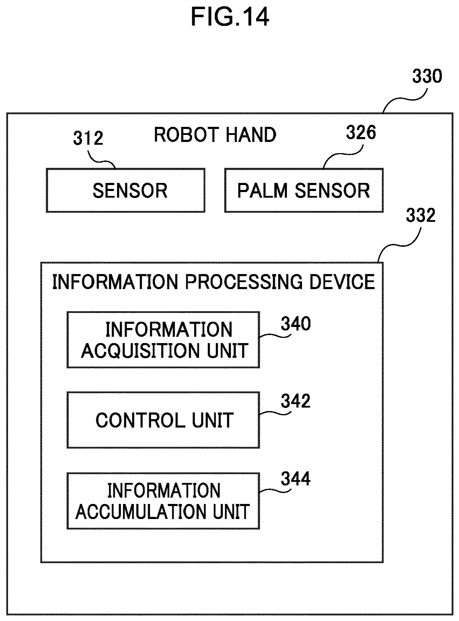

Fig. 14 is a schematic diagram illustrating an example of a functional configuration of a control system of the opening device 310. A control system 330 includes a sensor 312, a palm sensor 326, and an information processing device 332. The control system 330 is incorporated in, for example, the vehicle control device 206.

Information output from the palm sensor 326 is transmitted to the information processing device 332.

The information processing device 332 specifies a position of the delivery object 94 with high accuracy on the basis of the information from the palm sensor 326. The information processing device 332 calculates the degree of spread of the finger portions 322A, 322B, and 322C at the time of gripping the delivery object 94, the strength at the time of gripping, the suction force of the suction pad 324, and the like. The information processing device 332 can accurately control minute motions of the arm portions 315 and 316 and the grip portion 320, and can cope with various types of work on various delivery objects 94.

The sensor 312 sequentially acquires information indicating at least a distance and an angle between the delivery object 94 that is a work target of the opening device 310 and the arm portions 315 and 316. As the sensor 312, a highest-performance camera, a solid-state LiDAR, a multi-color laser coaxial displacement meter, or any of various other sensor groups may be used. Examples of the sensor 312 include a vibratory meter, a thermo camera, a hardness meter, a radar, a LiDAR, a high-pixel/telephoto/ultra-wide angle/360 degrees/high-performance camera, a vision recognition sensor, a microsound sensor, an ultrasonic sensor, a vibration sensor, an infrared sensor, an ultraviolet sensor, an electromagnetic wave sensor, a temperature sensor, a humidity sensor, a spot AI weather forecast sensor, a high-precision multichannel GPS sensor, a low-altitude satellite information sensor, and a sensor using long tail incident AI data.

In addition to the above information, the sensor 312 detects an image, a distance, vibration, heat, odor, a color, sound, an ultrasonic wave, an ultraviolet ray, an infrared ray, or the like. Examples of the information detected by the sensor 312 include a movement of the center of gravity of the opening device 310, a material of an installation surface on which the opening device 310 is installed, the outside air temperature, the outside air humidity, vertical and lateral oblique inclination angles of the installation surface, and a moisture amount.

The sensor 312 performs such detection, for example, every nanosecond.

The palm sensor 326 (the high-resolution camera and the MoPU) is a sensor provided on the grip portion 320 of the arm portions 315 and 316. Apart from the sensor 312, the palm sensor 326 has a camera function of imaging the delivery object 94 and a position specifying function of specifying the position of the delivery object 94.

In a case in which one MoPU is used, it is possible to acquire vector information of the motion of the point indicating the position of the delivery object 94 along each of the two coordinate axes (the x-axis and the y-axis) in the three-dimensional orthogonal coordinate system. According to the principle of stereo cameras, two MoPUs may be used to output vector information of the motion of the point indicating the position of the delivery object 94 along each of three coordinate axes (the x-axis, the y-axis, and the z-axis) in the three-dimensional orthogonal coordinate system. The z-axis is, for example, an axis along a depth method (a traveling direction of the delivery vehicle 300).

The information processing device 332 includes an information acquisition unit 340, a control unit 342, and an information accumulation unit 344.

The information acquisition unit 340 acquires information regarding the delivery object 94 detected by the sensor 312 and the palm sensor 326 (the high-resolution camera and the MoPU).

The control unit 342 controls operations and the like of the arm portions 315 and 316 by using the information acquired by the information acquisition unit 340 from the sensor 312 and artificial intelligence (AI).

The control unit 342 ascertains the type (a shape, a size, a hardness, and the like) and the position of the delivery object 94 in detail by using the information acquired by the information acquisition unit 340 from the palm sensor 326 (the high-resolution camera and the MoPU). The control unit 342 causes the palm portion 320A to face the delivery object 94 according to the outer shape and the position. The control unit 342 performs control such that the delivery object 94 is sucked by the suction pad 324 and held by the three finger portions 322A, 322B, and 322C (grip control). The control unit 342 may ascertain the type of the delivery object 94 and select the type of gripping (for example, only "suction", only "holding", and a combination of "suction" and "holding") on the basis of the outer shape information regarding the delivery object 94.

For example, the control unit 342 appropriately selects and executes all or some of the following types of processing as the entire operation.
(1) The arm portions 315 and 316 are driven such that the delivery object 94 can be picked up.
(2) The grip portion 320 is driven to be able to grip the delivery object 94.
(3) The arm portions 315 and 316 are driven relative to the base portion 314 to be suitable for opening and cooking the delivery object 94 with the cooking device 350.
(4) The opening device 310 is balanced to be prevented from falling over.

The cooking device 350 includes a second temperature control device that adjusts the temperature of the delivery object 94 to a predetermined temperature in a case in which the delivery object 94 is a food product. The temperature adjustment using the second temperature control device includes maintaining the temperature of the delivery object 94 without being affected by the temperature of the surrounding environment in addition to changing the temperature of the delivery object 94. For example, in a case in which the delivery object 94 is a frozen food product, the temperature adjustment includes heating and thawing the delivery object 94. In a case in which the delivery object 94 is a frozen food product, the temperature adjustment includes naturally thawing the delivery object 94 in a surrounding environment. In a case in which the delivery object 94 is a food product at normal temperature, the temperature adjustment includes heating the delivery object 94 (so-called "warming cooking"). Examples of the second temperature control device include a freezer, a refrigerator, a heater, and a microwave oven.

The vehicle control device 206 may control the temperature adjustment of the delivery object 94 using the second temperature control device so that the temperature of the delivery object 94 in a case in which the delivery vehicle 300 reaches the package yard 83 provided in the destination dwelling 82 is set to a predetermined temperature.

The cooking device 350 further has a function of performing predetermined cooking, for example, simple cooking, on the delivery object 94 in a case in which the delivery object 94 is a food product. Specifically, a configuration called a robot hand similar to the opening device 310 can be used as the cooking device 350. More specifically, as illustrated in Figs. 12A to 14, the base portion 314 and the arm portions 315 and 316 are provided, and the arm portions 315 and 316 are provided with the grip portion 320.

The cooking that can be performed by the cooking device 350 includes one or more of
(C1) adding a seasoning to the delivery object 94 that is a food product,
(C2) mixing or dressing ingredients in a case in which the delivery object 94 includes a plurality of types of ingredients,
(C3) cutting ingredients of the delivery object 94, and the like.

In the case of adding a seasoning to the delivery object 94 that is a food product, for example, the seasoning may be contained in a seasoning container or a seasoning bag. In this case, for example, the seasoning can be added to the food product by cutting or perforating a part of the seasoning container or the seasoning bag by using the edged tool 328 illustrated in Fig. 12A. In a case in which an opening of the seasoning container is sealed with a cap, it is possible to add the seasoning to the food product by gripping the cap with the grip portion 320 and then opening the opening.

In the case of mixing or dressing a plurality of types of ingredients, for example, an operation of mixing or dressing the ingredients can be performed directly using the finger portions 322A, 322B, and 322C. In addition, cooking tongs, cooking chopsticks, and cutlery (forks, knives, spoons, and the like) may be prepared separately from the cooking device 350, one or more of these tools may be gripped by the grip portion 320, and a plurality of ingredients may be mixed or dressed.

The edged tool 328 illustrated in Fig. 12A may also be used in the case of cutting an ingredient. A blade edge of the edged tool 328 may be movable forward and backward with respect to the finger portion, and a length of the blade portion may be adjusted according to a size of an ingredient or the like. In a case in which the ingredient is not cut, the blade edge may be retracted so that the edged tool does not affect cooking (the edged tool does not inadvertently touch the ingredient).

The robot hand used for cooking may also be used as a robot hand used as the opening device 310, or may be provided as a robot hand that performs cooking separately from the opening device 310.

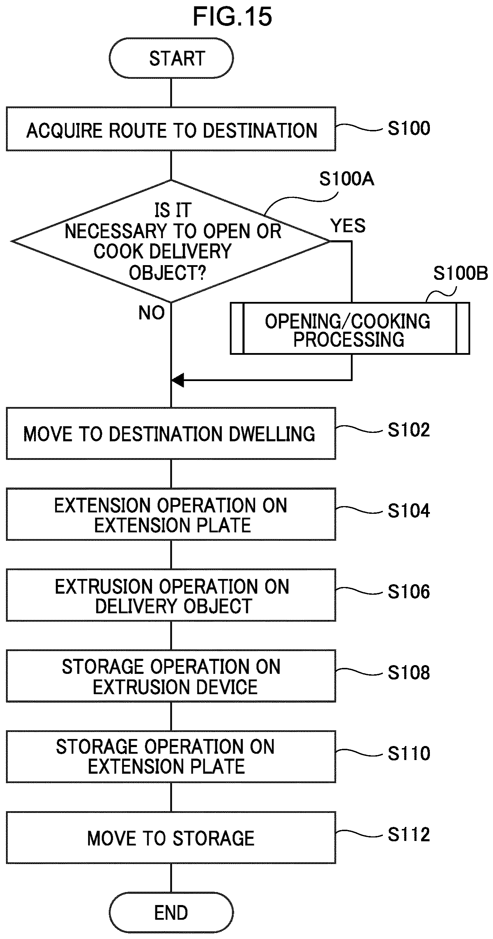

Fig. 15 illustrates a flow of delivery processing executed in the second embodiment. In the flowchart of Fig. 15, the same steps as those in the flow of the delivery processing illustrated in Fig. 8 are denoted by the same reference signs.

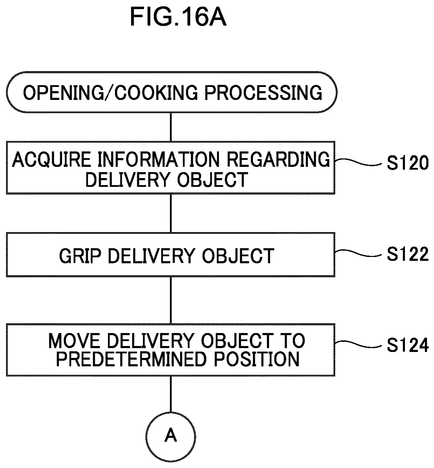

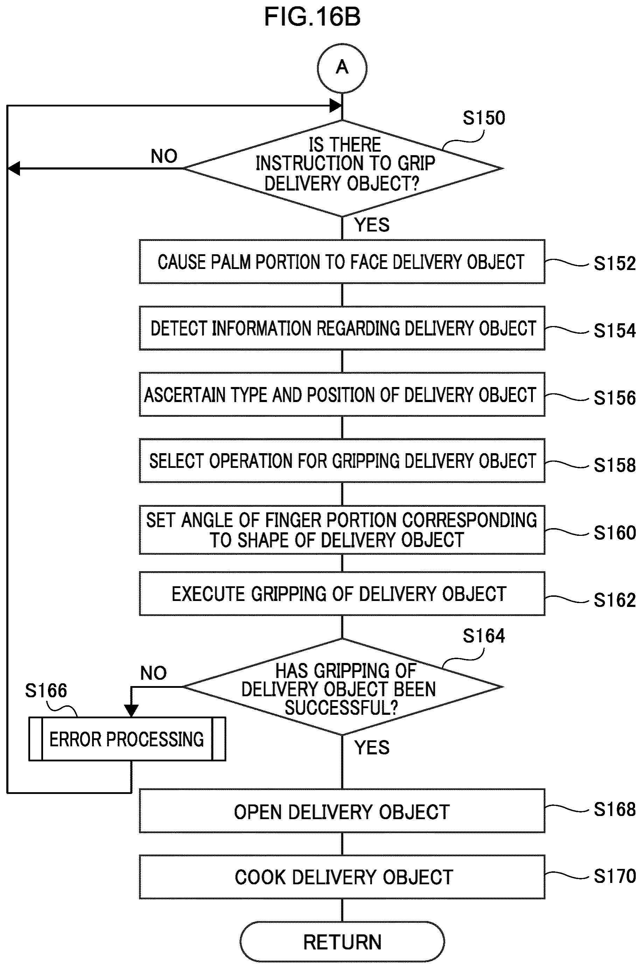

After acquiring the route to the destination dwelling 82 in step S100, the vehicle control device 206 proceeds to step S100A. In step S100A, the vehicle control device 206 determines whether it is necessary to open or cook the delivery object 94. In a case in which the determination in step S100A is positive, the processing proceeds to step S100B. In step S100B, the opening/cooking processing illustrated in Figs. 16A and 16B is executed. In contrast, in a case in which the determination in step S100A is negative, the processing proceeds to step S102. After the processing proceeds to step S102, delivery of the delivery object 94 is performed similarly to the delivery processing illustrated in Fig. 8.

In the opening/cooking processing, as illustrated in Fig. 16A, in step S120, the information acquisition unit 340 acquires information regarding the delivery object 94 detected by the sensor 312.

In step S122, the control unit 342 controls the base portion 314 and the arm portions 315 and 316 to grip the delivery object 94 by using the information regarding the delivery object 94 acquired in step S120 and the AI.

In step S124, the control unit 342 moves the gripped delivery object 94 to a predetermined position. For example, in a case in which the delivery object 94 is to be opened by the opening device 310, the predetermined position may be a position suitable for opening. In a case in which the delivery object 94 is to be cooked by the cooking device 350, the predetermined position may be a position suitable for cooking.

According to the embodiment, the opening device 310 can determine a distance to or an angle of the delivery object 94, and can thus perform the operation of gripping the delivery object 94.

### (Opening Control of Delivery Object 94)

Fig. 16B is a flowchart illustrating a control procedure in a case in which the delivery object 94 is gripped by the grip portion 320 and opened following the operation of the opening device 310 illustrated in Fig. 16A.

In step S150, the control unit 342 determines whether there is an instruction to grip the delivery object 94. In a case in which this determination is positive, the processing proceeds to step S152. In step S152, the control unit 342 moves the opening device 310 (for example, the arm portions 315 and 316 are operated) and causes the palm portion 320A to face the delivery object. The processing proceeds to step S154.

In step S154, the control unit 342 detects information regarding the delivery object 94.

In step S156, the control unit 342 analyzes the detection information by the palm sensor 226 (the high-resolution camera and the MoPU) to ascertain the type (a shape, a size, a hardness, and the like) and a position of the delivery object 94. The processing proceeds to step S158.

In step S158, the control unit 342 selects work for gripping the delivery object 94. Specifically, the work for gripping is selected from, for example, only "suction", only "holding", and a combination of "suction" and "holding". Next, the processing proceeds to step S160. In step S160, the control unit 342 sets the angles (degrees of opening) of the finger portions 322A, 322B, and 322C according to the shape of the delivery object 94. The processing proceeds to step S162.

In step S162, the control unit 342 executes gripping (only "suction", only "holding", and "suction" and "holding") of the delivery object 94.

In step S164, it is determined whether the delivery object 94 has been successfully gripped. In a case in which the determination is negative, the processing proceeds to step S166. In step S166, the control unit 342 performs error processing (for example, retry or cancellation), and returns to step S150.

In a case in which the determination in step S164 is positive, the processing proceeds to step S168. In step S168, the control unit 342 opens the delivery object 94. In step S170, the control unit 342 performs predetermined cooking on the delivery object 94. The processing proceeds to step S102 (see Fig. 15).

In a case in which the determination in step S164 is negative, the processing proceeds to step S166, error processing (for example, retry or cancellation) is executed, and the processing returns to step S150.

As described above, according to the embodiment, the three finger portions 322A, 322B, and 322C are provided in the grip portion 320, and the plurality of suction pads 324 are attached to the palm portion 320A of the grip portion 320 and the finger portions 322A, 322B, and 322C. The suction pad 324 has, for example, an air suction structure, and can grip the delivery object 94 by sucking the delivery object 94 and bending the finger portions 322A, 322B, 322C.

The palm sensor 326 including the high-resolution camera and the MoPU is attached to the palm portion 320A. By attaching the grip portion 320 having the above structure to the arm portions 315 and 316, it is possible to reliably capture and grip the delivery object 94.

Since the palm sensor 326 (the high-resolution camera and the MoPU) is mounted on the palm portion 320A, it is possible to capture the delivery object 94 with high accuracy and to cope with work that makes minute motions.

For very soft and fragile delivery object 94, it is possible to hold the delivery object through motions of the finger portions 322A, 322B, 322C without using the suction pad 324, and it is possible to prevent damage to the soft delivery object 94 or the like by adjusting the holding force.

The second embodiment is an example in which the opening device 310 is provided in the delivery vehicle 300. That is, the delivery vehicle 300 has both the opening device 310 and the cooking device 350. Therefore, for example, in a case in which the delivery object 94 is a food product, the delivery vehicle 300 may both open the delivery object 94 and cook the delivery object.

In the second embodiment, the cooking device 350 is provided at a position closer to the delivery object exit opening portion 210 of the delivery vehicle 300 than the opening device 310. Therefore, opening and cooking can be performed in order while the delivery object 94 is moved in the same direction as the extrusion direction of the delivery object 94 by the extrusion device 202. For example, the delivery object 94 can be opened by the opening device, and the delivery object 94 can be moved by the extrusion device 202 to the delivery object exit opening portion 210 by a predetermined distance to be cooked by the cooking device 350. After cooking, the delivery object 94 can be moved to the delivery object exit opening portion 210 again by the extrusion device 202.

As a modification example, the opening device 310 may be provided in the storage 510 instead of the example in which the opening device 310 is provided in the delivery vehicle 300 as in the second embodiment. In this case, before the delivery object 94 is delivered from the storage 510 to the delivery vehicle 300, the delivery object 94 can be opened by the opening device 310 provided in the storage 510. Since the opening device 310 is not provided in the delivery vehicle 300, it is possible to simplify the structure of the delivery vehicle 300, reduce the weight, and reduce the cost.

Next, a third embodiment will be described. In the third embodiment, the same elements, members, and the like as those in the first embodiment or the second embodiment are denoted by the same reference numerals, and a detailed description thereof will be omitted.

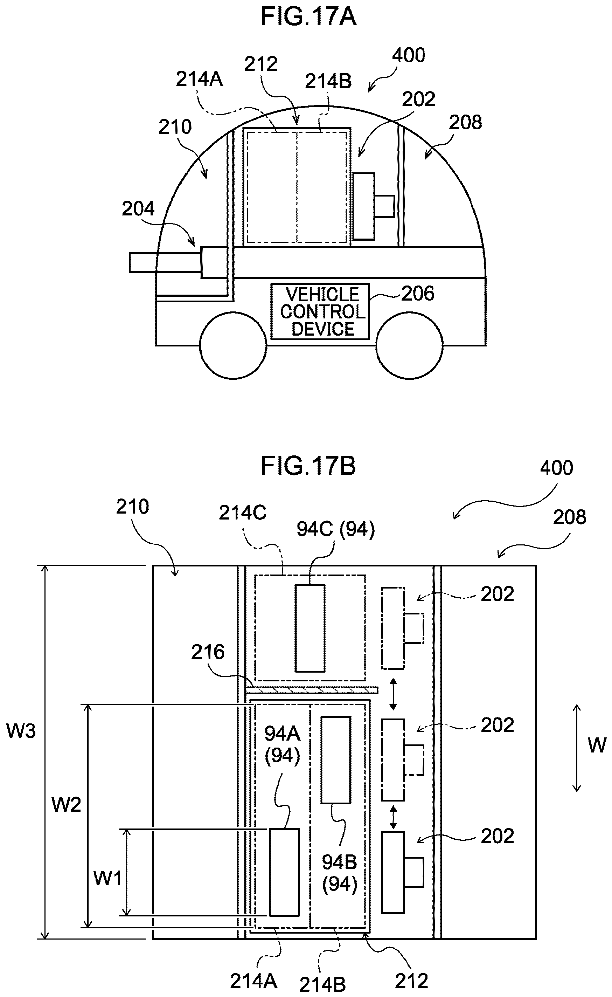

Figs. 17A and 17B illustrate a delivery vehicle 400 according to the third embodiment. The delivery vehicle 400 further includes a heating device 212 in addition to the constituents of the delivery vehicle 200 of the first embodiment.

The heating device 212 is disposed between the delivery object entrance opening portion 208 and the delivery object exit opening portion 210. In other words, the heating device 212 is disposed in a region between the rear region of the vehicle and the front region of the vehicle.

For example, in a case in which a delivery object is delivery food, that is, a "food product", the heating device 212 is a device that heats the delivery object. More specifically, for example, in a case in which the delivery object is a frozen food product, the heating device is capable of thawing and cooking the frozen food product through heating. Examples of the heating device 212 include a microwave oven, an electric oven, a carbon-type heating device, a gas range, and a gas stove. In the configuration using combustion of gas, a gas cylinder may be mounted on the delivery vehicle 400, and supply of combustion gas from the gas cylinder may be received. In order to prevent the flame of the gas from directly acting on the delivery object, the flame of the gas may act on another heat transfer body, and the delivery object may be heated by radiant heat from the heat transfer body or through convection of air, thereby enhancing safety. The heating device 212 may be an electromagnetic cooking device (so-called IH cooking device) that generates heat by induction heating depending on the type of a delivery object container. The heating device 212 may also serve as the cooking device 350 of the second embodiment.

As illustrated in Fig. 17B, the delivery vehicle 400 is provided with a heating portion 214A, a preheating portion 214B, and a non-heating portion 214C. The heating portion 214A and the preheating portion 214B are portions (regions) on which heat of the heating device 212 acts. On the other hand, the non-heating portion 214C is a portion (region) on which the heat of the heating device 212 does not act.

In the third embodiment, a region where the heating portion 214A and the preheating portion 214B are provided and a region where the non-heating portion 214C is provided are partitioned by a partition wall 216. Since the partition wall 216 is provided in the non-heating portion 214C, the heat of the heating portion 214A and the preheating portion 214B is not transmitted or hardly transmitted.

The heating portion 214A and the preheating portion 214B are portions (regions) on which the heat of the heating device 212 acts. As described above, for example, in a case in which a delivery object is a frozen food product, a delivery object 94A placed on the heating portion 214A can be heated. Similarly, in a case in which a delivery object is a frozen food product, a delivery object 94B placed in the preheating portion 214B can be heated (preheated) in advance.

As a positional relationship between the heating portion 214A and the preheating portion 214B, the heating portion 214A is set at a position relatively close to the delivery object exit opening portion 210, and the preheating portion 214B is set at a position relatively close to the delivery object entrance opening portion 208. Therefore, a structure is provided in which, in a case in which the frozen food product is moved from the delivery object entrance opening portion 208 to the delivery object exit opening portion 210, the thawing processing using the preheating portion 214B and the heating cooking using the heating portion 214A can be executed on the frozen food product in a series of flows along the movement direction.

In the third embodiment, as illustrated in Fig. 17B, the heating portion 214A and the preheating portion 214B have a width W2 that is twice or more the width W1 of the delivery object. Two delivery objects can be placed at different positions (misaligned positions) in the width direction (arrow W direction) of the delivery vehicle 400.

The extrusion device 202 is movable in the width direction of the delivery vehicle 400. Specifically, for example, a structure can be obtained in which a rail extending in the width direction of the delivery vehicle 400 may be installed, and the extrusion device 202 is movable in the width direction of the delivery vehicle 400 along the rail.

For example, at the position indicated by the dot chain line in Fig. 17B, the extrusion device 202 can extrude the delivery object 94B in the preheating portion 214B, and in this case, the delivery object 94A in the preheating portion 214A is not extruded. Similarly, in the position indicated by the solid line in Fig. 17B, the delivery object 94A in the heating portion 214A can be extruded by the extrusion device 202, and in this case, the delivery object 94B in the preheating portion 214B is not extruded. As described above, the extrusion of the delivery object 94B placed in the preheating portion 214B and the extrusion of the delivery object 94A placed in the heating portion 214A are not affected by each other.

The inner dimension of the delivery vehicle 400 in the width direction has a width W3 that is three times or more the width of the delivery unit. At the position indicated by the two-dot chain line in Fig. 17B, the extrusion device 202 can extrude a delivery object 94C placed in the non-heating portion 214C, and in this case, the delivery object 94A placed in the heating portion 214A and the delivery object 94B placed in the preheating portion 214B are not extruded.

In the third embodiment, the delivery processing may be executed in the system 10 according to the flowchart of Fig. 8. In this case, the processing of the flowchart of Fig. 8 is an example of delivery processing in a case in which a delivery object is not heated by the heating device 212 of the delivery vehicle 400. The processing of the flowchart of Fig. 8 is started, for example, in a case in which the delivery object 94 addressed to the dwelling 82 is loaded on the delivery vehicle 400 from the distribution vehicle 92.

In this case, in S102, the vehicle control device 206 causes the delivery vehicle 400 loaded with the delivery object 94 addressed to the dwelling 82 to move to the package yard 83 provided in the dwelling 82. Because the delivery object 94 is not heated, for example, the delivery object 94 can be placed in non-heating portion 214C. The delivery object 94 may be placed in the heating portion 214A and the preheating portion 214B, and the heating device 212 need not be operated.

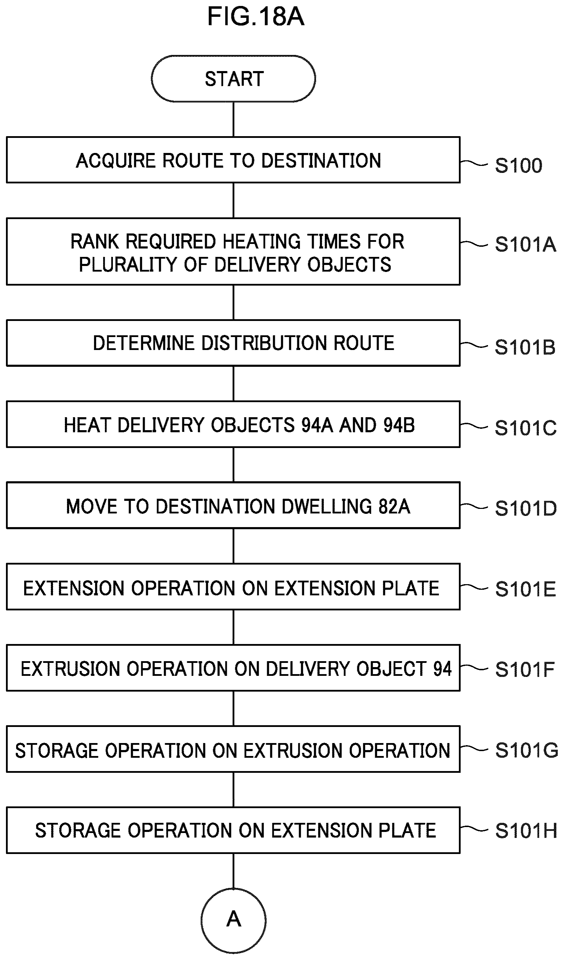

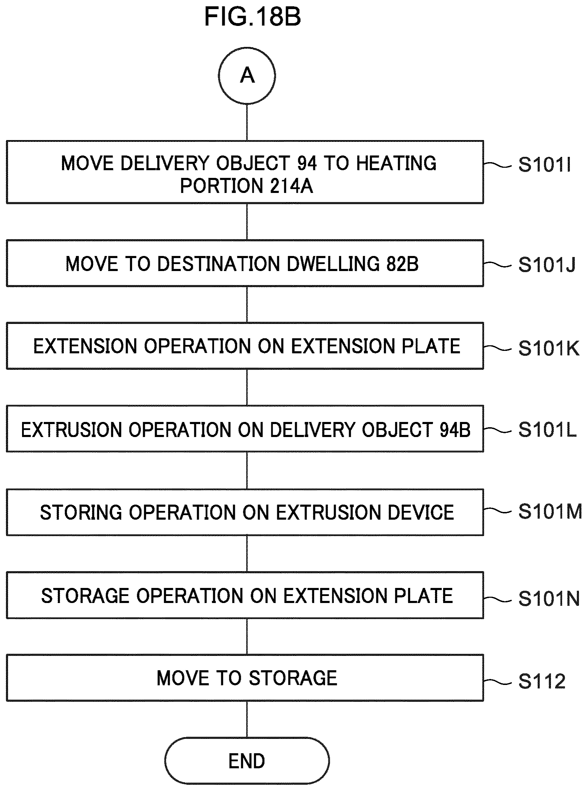

Figs. 18A and 18B are flowcharts illustrating an example different from that in Fig. 8 as a flow of delivery processing executed in the system 10. The processing in the flowcharts of Figs. 18A and 18B is an example of delivery processing in a case in which there are a plurality of frozen food products as delivery objects to be delivered to a plurality of destinations, heating is performed by the heating device 212 of the delivery vehicle 400, and thawing processing and heating processing are performed. Similarly to the processing in the flowchart of Fig. 8, the processing in the flowchart of Fig. 18A is started, for example, in a case in which the delivery object 94 addressed to the dwelling 82 is loaded on the delivery vehicle 400 from the distribution vehicle 92. In the flowcharts of Figs. 18A and 18B, the same processing as that in the flowchart of Fig. 8 is denoted by the same reference sign.

In S100, the vehicle control device 206 acquires, from the control device 540, routes to a plurality of destination dwellings 82.

In S101A, the vehicle control device 206 ranks the plurality of delivery objects by the required heating time. The "required heating time" is a time required from the thawing processing to the heating cooking of the frozen food product through the heating from heating device 212. The delivery objects are ranked by assigning a rank number from a delivery object having a shorter required heating time. The delivery objects having the same required heating time are assigned with the same number. Hereinafter, for convenience of description, the number of delivery objects is two. In this case, the delivery object 94A illustrated in Fig. 17B is a delivery object having a short required heating time, and the delivery object 94B is a delivery object having a long required heating time. In other words, the delivery object 94A is a delivery object to be delivered first, and the delivery object 94B is a delivery object to be delivered later. Hereinafter, a destination dwelling of the delivery object 94A is distinguished as a dwelling 82A, and a destination dwelling of the delivery object 94B is distinguished as a dwelling 82B.

In S101B, the vehicle control device 206 determines a distribution route on the basis of the routes to the plurality of dwellings 82A and 82B acquired in S100 and the ranking for the delivery objects executed in S101A. Specifically, a delivery route is set such that the delivery object 94A having a short required heating time is delivered first, and the delivery object 94B having a long required heating time is delivered later.

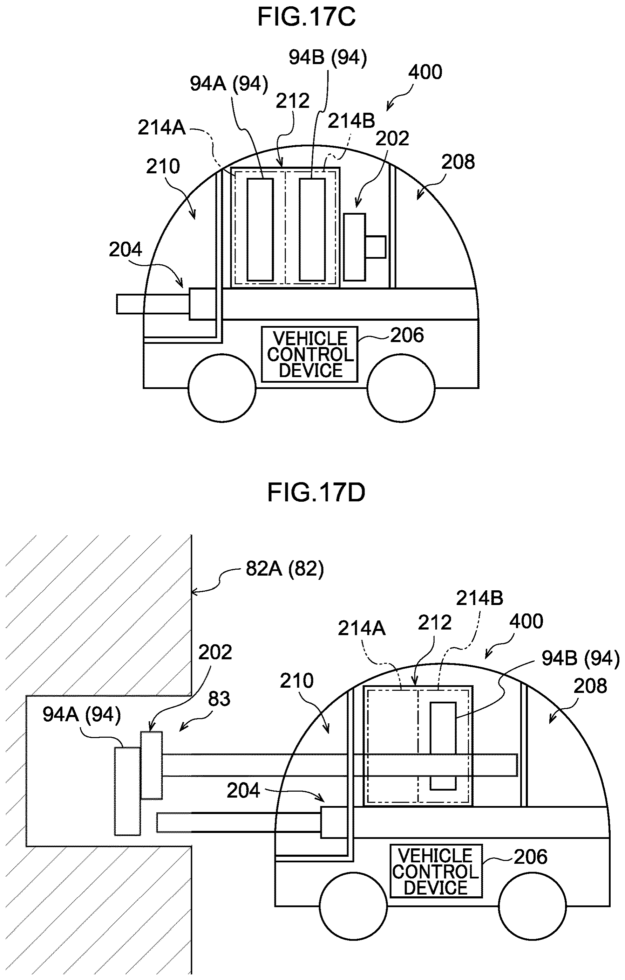

In S101C, the vehicle control device 206 places each of the plurality of delivery objects at a predetermined position of the delivery vehicle 400, and starts heating the delivery object. Specifically, as illustrated in Figs. 17B and 17C, the delivery object 94A is placed in the heating portion 214A, and the delivery object 94B is placed in the preheating portion 214B.

The heating capability in this case is set such that the thawing processing and the heating cooking for the delivery object 94A are completed in a delivery time until the delivery of the delivery object 94A is completed, for example. However, the required heating time of the delivery object 94B is longer than that of the delivery object 94A. Therefore, at the time at which the thawing processing and the heating cooking of the delivery object 94A are completed, the delivery object 94B receives heat from the heating device 212, but is in a preheated state in which the thawing processing and the heating cooking are not completed.

In S101D, the vehicle control device 206 causes the delivery vehicle 400 to move to the package yard 83 provided in the dwelling 82A.

In S101E, the vehicle control device 206 extends the extension plate 204 to the package yard 83 of the dwelling 82A.

In S101F, as illustrated in Fig. 17D, the vehicle control device 206 controls the extrusion device 202 to extrude the delivery object 94A to the package yard 83 of the dwelling 82A.

In S101G, the vehicle control device 206 performs a storage operation on the extrusion device 202.

In S101H, the vehicle control device 206 performs a storage operation on the extension plate 204.

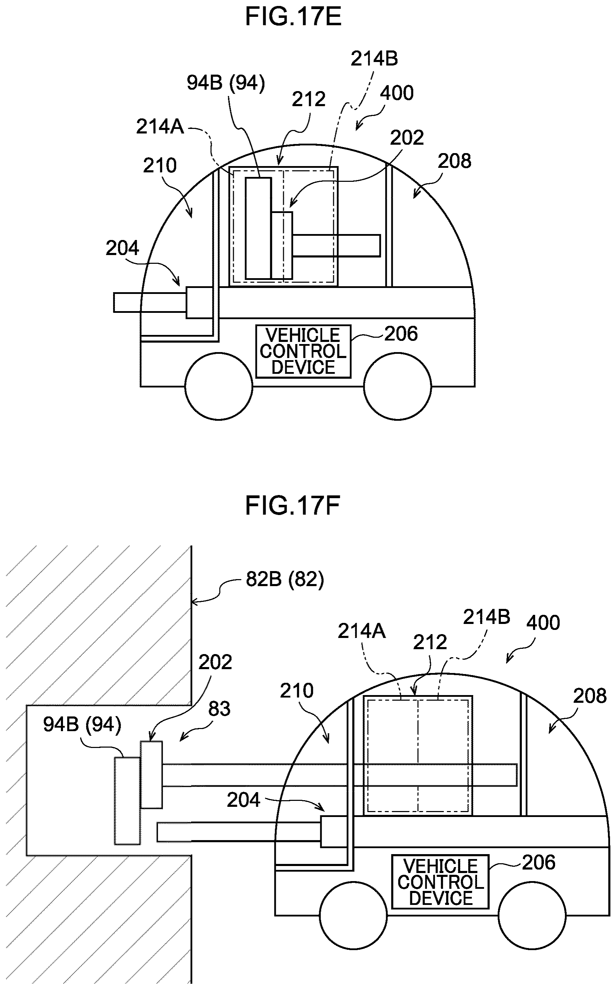

In S101I, the vehicle control device 206 controls the extrusion device 202 to extrude and move the delivery object 94B from the preheating portion 214B to the heating portion 214A as illustrated in Fig. 17E.

The delivery object 94B is heated by the heating device 212. The heating capability in this case is set such that the thawing processing and the heating cooking for the delivery object 94B are also completed in a delivery time until the delivery of the delivery object 94B is completed, for example.

In S101J, the vehicle control device 206 causes the delivery vehicle 400 to move to the package yard 83 provided in the dwelling 82B.

In S101K, as illustrated in Fig. 17F, the vehicle control device 206 extends the extension plate 204 to the package yard 83 of the dwelling 82B.

In S101L, the vehicle control device 206 controls the extrusion device 202 to extrude the delivery object 94B to the package yard 83 of the dwelling 82B.

In S101M, the vehicle control device 206 performs a storage operation on the extrusion device 202.

In S101N, the vehicle control device 206 performs a storage operation on the extension plate 204.

In S112, the vehicle control device 206 causes the delivery vehicle 400 to move to the storage 510.

As described above, even in a case in which the delivery processing on a delivery object is performed according to the flows illustrated in Figs. 18A and 18B, the system 10 can automatically deliver the delivery object. Therefore, a desired object can be delivered to a dweller of the apartment building 80 in a case in which the dweller wants the object.

In a case in which the delivery processing on a delivery object is performed according to the flows illustrated in Figs. 18A and 18B, the delivery object 94B can also be heated (preheated) in advance by the heating device 212 during the time during which the delivery object 94A is heated by the heating device 212. The total heating time for the delivery object 94B can be shortened compared with the case in which the delivery object 94B is not heated in advance.

Compared with a case in which the delivery object 94B is heated separately from the delivery object 94A, the delivery object 94B can be heated (preheated) in advance by using the heat at the time of heating the delivery object 94A. Therefore, the heat energy required for the thawing processing and the heating cooking for the delivery object 94B is also reduced.

In a case in which the delivery processing on a delivery object is performed according to the flows illustrated in Figs. 18A and 18B, it is also possible to further deliver the delivery object 94 that is not required to be heated. In this case, in consideration of the required heating times of the delivery object 94A and the delivery object 94B, the delivery object 94 that is not required to be heated may be delivered while the delivery object 94A or the delivery object 94B is heated by the heating device 212.

For example, one or more delivery objects 94 required to be heated and one or more delivery objects 94 not required to be heated may be delivered. In this case, for example, it is possible to set the delivery route such that the delivery vehicle 400 is located near the destination dwelling 82 of a delivery object not required to be heated at the time at which the heating of the delivery object 94 required to be heated is completed. The delivery object 94 not required to be heated may be delivered while the delivery object 94 required to be heated is heated.

Blocks in the flowcharts and the block diagrams in the embodiments may represent stages of a process in which an operation is performed or "units" of a device having a role of performing an operation. Specific stages and "units" may be implemented by a dedicated circuit, a programmable circuit supplied along with computer readable instructions stored on a computer readable storage medium, and/or a processor supplied along with computer readable instructions stored on a computer readable storage medium. Dedicated circuits may include digital and/or analog hardware circuits, and may include integrated circuits (ICs) and/or discrete circuits. Programmable circuits may include reconfigurable hardware circuits including, for example, AND, OR, XOR, NAND, NOR, and other logical operations, flip-flops, registers, and memory elements, such as field programmable gate arrays (FPGA) and programmable logic arrays (PLA).

Computer readable storage media may include any tangible device capable of storing instructions executed by a suitable device, and, as a result, a computer readable storage medium having instructions stored thereon has a product including instructions that may be executed to create means for executing operations designated in the flowcharts or block diagrams. Examples of the computer readable storage medium may include an electronic storage medium, a magnetic storage medium, an optical storage medium, an electromagnetic storage medium, and a semiconductor storage medium. More specific examples of the computer readable storage medium may include a Floppy (registered trademark) disk, a diskette, a hard disk, a random access memory (RAM), a read-only memory (ROM), an erasable programmable read-only memory (an EPROM or a flash memory), an electrically erasable programmable read-only memory (EEPROM), a static random access memory (SRAM), a compact disc read-only memory (CD-ROM), a digital versatile disk (DVD), a Blu-Ray (registered trademark) disk, a memory stick, and an integrated circuit card.

The computer readable instructions may include either source codes or object codes written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), or JAVA (registered trademark), C++, and conventional procedural programming languages such as the "C" programming language or similar programming languages.

The computer readable instructions may be provided to a processor of a general purpose computer, a special purpose computer, or another programmable data processing device, or a programmable circuit locally or via a local area network (LAN) or a wide area network (WAN) such as the Internet, in order to cause the processor of the general purpose computer, the special purpose computer, or another programmable data processing device or the programmable circuit to execute the computer readable instructions to generate means for executing operations designated in the flowcharts or the block diagrams. Examples of the processor include a computer processor, a processing unit, a microprocessor, a digital signal processor, a controller, and a microcontroller.

Although the invention has been described by using the embodiments, the technical scope of the invention is not limited to the scope described in the above embodiments. It is apparent to those skilled in the art that various modifications or improvements can be made to the above embodiments. It is apparent from the description of the claims that modes to which such modifications or improvements are added can also be included in the technical scope of the invention.

The order of execution of each piece of processing of operations, procedures, steps, stages, and the like in the devices, the systems, the programs, and the methods shown in the claims, the specification, and the drawings can be realized in any order unless "before", "prior to", or the like is explicitly stated, and unless the output of the previous processing is used in the later processing. Even in a case in which the operation flow in the claims, the specification, and the drawings is described by using "first,", "next,", and the like for convenience, this does not mean that it is essential to perform in this order.

The disclosure of Japanese Patent Application No. 2023-24635 filed on February 20, 2023, the disclosure of Japanese Patent Application No. 2023-66732 filed on April 14, 2023, and the disclosure of Japanese Patent Application No. 2023-75280 filed on April 28, 2023 are incorporated herein by reference in their entirety.

All of the documents, the patent applications, and the technical standards described in the present specification are incorporated herein by reference to the same extent as in a case in which each of the documents, the patent applications, and the technical standards were specifically and individually indicated to be incorporated by reference.

## Claims

1. A delivery system for automatically delivering a delivery object to each of a plurality of dwellings in a building by using a delivery vehicle traveling in a passage in the building, the delivery vehicle including
a delivery object entrance opening portion, a delivery object exit opening portion, an extrusion device, and an extendable extension plate, the delivery system comprising:
a control unit that performs control such that the delivery vehicle moves to a delivery object yard provided in a destination dwelling of the delivery object, the extension plate is extended to the delivery object yard in a case in which the delivery vehicle arrives at the delivery object yard, and the delivery object is extruded to the delivery object yard by the extrusion device.

2. The delivery system according to claim 1, wherein the delivery object flows in one direction from the delivery object entrance opening portion to the delivery object exit opening portion.

3. The delivery system according to claim 1, wherein a height of the delivery object yard of each of the plurality of dwellings corresponds to a height of the extension plate.

4. The delivery system according to claim 1, wherein, in a case in which the delivery object is a food product, the control unit controls a temperature of a temperature control device mounted on a distribution vehicle that distributes one or a plurality of the delivery objects to the building so that a temperature of the delivery object in a case in which the delivery vehicle reaches a delivery object yard provided in a dwelling that is a destination of the delivery object is a predetermined temperature.

5. The delivery system according to claim 4, wherein the temperature control device is a refrigerator or a heater.

6. The delivery system according to claim 1, wherein the delivery vehicle includes a cooking device that cooks the delivery object in a case in which the delivery object is a food product.

7. The delivery system according to claim 6, wherein the cooking using the cooking device includes temperature adjustment for adjusting a temperature of the delivery object to a predetermined temperature.

8. The delivery system according to claim 7, wherein the temperature adjustment includes setting, as the predetermined temperature, a temperature of the delivery object in a case in which the delivery vehicle reaches a delivery object yard provided in a dwelling that is a destination of the delivery object.

9. The delivery system according to claim 6, further comprising an opening device that is controlled by the control unit and opens the delivery object before the cooking device performs the cooking.

10. The delivery system according to claim 9, wherein the opening device is provided in the delivery vehicle.

11. The delivery system according to claim 10, wherein the cooking device is provided at a position closer to the delivery object exit opening portion of the delivery vehicle than the opening device.

12. The delivery system according to claim 9, wherein the opening device is provided in a storage in which the delivery vehicle waits.

13. The delivery system according to claim 1, wherein the delivery vehicle includes
a heating device that heats the delivery object,
a heating portion in which the delivery object is heated by the heating device in a case in which the delivery object is a food product, and
a preheating portion that is provided at a position closer to the delivery object entrance opening portion than the heating portion and in which the delivery object is heated in advance.

14. The delivery system according to claim 13, wherein the control unit controls the extrusion device to extrude the delivery object heated by the heating portion to the delivery object yard and to extrude the delivery object heated in advance by the preheating portion to the heating portion.

15. The delivery system according to claim 14, wherein the control unit controls the extrusion device to place, in the heating portion, the delivery object to be delivered first among a plurality of the delivery objects, and place, in the preheating portion, the delivery object to be delivered later.

16. The delivery system according to claim 15, wherein the control unit sets delivery routes of the plurality of delivery objects on the basis of heating times and preheating times for the plurality of delivery objects.

17. The delivery system according to claim 13, wherein the control unit controls the heating device so that a temperature of the delivery object in a case in which the delivery vehicle reaches the delivery object yard is a predetermined temperature.

18. A building comprising the delivery system according to any one of claims 1 to 17.

19. The building according to claim 18, wherein the building includes a plurality of floors, and
includes a lifting lane for moving the delivery vehicle between different floors of the building.

20. A distribution system comprising:
the delivery system according to any one of claims 1 to 17; and
a server that manages transportation of a delivery object using a distribution vehicle from a logistics base outside a building to the building.
